# EUROPÄISCHE PATENTANMELDUNG

(11) **EP 2 157 675 A2**
(43) Veröffentlichungstag der Anmeldung: **24.02.2010**
(21) Anmeldenummer: 09010768.1
(22) Anmeldetag: 21.08.2009
(51) Int. Cl.: H02H 1/00, H02H 3/33

(54) **Schutzschalter und Verwendung eines derartigen Schutzschalters in einem elektrischen Gerät**

(30) Priorität: 22.08.2008 DE 102008039249
(71) Anmelder: Fohs, Winfried, 66440 Blieskastel (DE)
(72) Erfinder: Fohs, Winfried, 66440 Blieskastel (DE)
(74) Vertreter: Wieske, Thilo

(57) **Zusammenfassung**

Die Erfindung betrifft einen DI-Fehlerstromschutzschalter in der elektrischen Energieversorgung, mit Auswertungsmitteln zur Auswertung des Summenstroms der auf einem oder mehreren Phasenleitern sowie einem Nullleiter fließenden Ströme, mit ersten Erkennungsmitteln zur Erkennung von Fehlerzuständen abhängig von einem von den Auswertungsmitteln erkannten Summenstrom ungleich dem Wert "0" und mit weiteren Erkennungsmitteln zur Erkennung von Fehlerzuständen eines Schutzleiters, wobei die weiteren Erkennungsmittel eine Antennenvorrichtung aufweisen, die über eine Auswerteschaltung mit dem Schutzleiter verbunden ist, wobei mit der Antennenvorrichtung Signale elektromagnetischer Frequenzen einer Brummspannung empfangen werden, wobei die Spannungssignale der empfangenen Spannung mit dem Spannungspegel auf dem Schutzleiter verglichen werden, wobei im Falle einer erkannten Phasenspannung auf dem Schutzleiter die Auslösemittel des DI-Fehlerstromschutzschalters ausgelöst werden. Weiterhin betrifft die vorliegende Erfindung den Einsatz eines derartigen Schutzschalters in einem elektrischen Gerät.

## Beschreibung

Die Erfindung betrifft einen Schutzschalter und die Verwendung eines derartigen Schutzschalters in einem elektrischen Gerät nach den Ansprüchen 1 und 3.

DI-Schutzschalter sind bekannt. Bei diesen wird ein Fehlerstrom detektiert, wenn die Summe der Ströme eines (oder mehrerer Phasenleiter) sowie eines Nullleiters ungleich "0" sind. Es erfolgt bei einem DI-Schutzschalter eine allpolige Abschaltung, bei der auch der Schutzleiter getrennt wird. Dadurch soll eine Gefährdung von Personen verhindert werden, die durch Kriechströme auftreten könnte, die über den Schutzleiter fließen. Ein Ausführungsbeispiel eines DI-Schutzschalters ist aus der EP 806 825 B1 bekannt. Dort ist an einem Gehäuse eines elektrischen Gerätes eine Sensorfläche angebracht. Bei einer Berührung dieser Sensorfläche durch eine Person wird diese Sensorfläche über die Impedanz dieser Person mit der Erde verbunden. Sofern ein Isolationsfehler vorliegt und dadurch eine Spannung auf dem Schutzleiter liegt, führt dies zu einem Stromfluss. Dieser Stromfluss wird ausgewertet, um festzustellen, ob eine Auslösung der Abschaltung erforderlich ist.

Demgegenüber weisen nach der vorliegenden Erfindung die Erkennungsmittel für den Isolationsfehler auf dem Schutzleiter eine Antennenvorrichtung auf, die über eine Auswerteschaltung mit dem Schutzleiter verbunden ist, wobei mit der Antennenvorrichtung Signale elektromagnetischer Frequenzen einer Brummspannung empfangen werden, wobei die Spannungssignale der empfangenen Spannung mit dem Spannungspegel auf dem Schutzleiter verglichen werden, wobei im Falle einer erkannten Phasenspannung auf dem Schutzleiter die Auslösemittel des DI-Fehlerstromschutzschalters ausgelöst werden.

Bei dieser Ausgestaltung eines Schutzschalters erweist es sich als vorteilhaft, dass die Erkennung des Fehlerfalls bei der Durchführung der Überprüfung völlig unabhängig vom Benutzer ist.

Im Vergleich zum Stand der Technik wird deutlich, dass es dort bereits ein Problem sein kann, wenn der Benutzer von der Sensorfläche gegenüber der Erde isoliert ist. Eine solche Isolierung kann beispielsweise darin bestehen, dass der Benutzer isolierende Schuhsohlen an seinen Schuhen hat. Weiterhin kann diese Isolierung auftreten, wenn der Benutzer Handschuhe trägt. Wiederum ist die Isolierung geringer, wenn der Benutzer sich in einer feuchten Umgebung befindet und beispielsweise die Handschuhe nass sind bzw. der Benutzer eventuell auch auf einer Baustelle auf nassem Untergrund oder völlig in einer Pfütze steht.

Demgegenüber erweist es sich bei der vorliegenden Erfindung als vorteilhaft, dass die Überprüfung der Schutzfunktion unabhängig von derartigen Umgebungsbedingungen durchgeführt werden kann.

Es hat sich gezeigt, dass das elektromagnetische Feld einer Brummspannung immer ausreichend sicher gemessen werden kann, um die Schutzüberprüfung durchführen zu können.

Bei der Ausgestaltung nach Anspruch 2 erfolgen die Signalübertragungen zwischen den Erkennungsmitteln und den Auslösemitteln optisch.

Vorteilhaft kann dadurch eine galvanische Trennung zwischen den einzelnen Baugruppen realisiert werden.

Anspruch 3 betrifft die Verwendung eines DI-Fehlerstromschutzschalters nach Anspruch 1 oder 2 in einem elektrischen Gerät.

Das elektrische Gerät kann vorteilhaft ein Gerät sein, das unter verschiedenen Umgebungsbedingungen betrieben wird. Insbesondere wenn diese Umgebungsbedingungen sehr unterschiedlich sind und von trockenen Innenräumen von Gebäuden bis hin zum Einsatz im Außenbereich und auf Baustellen reichen, erweist es sich bei der vorliegenden Erfindung als vorteilhaft, dass die Überprüfung unabhängig von diesen Umgebungsbedingungen ist. Solche Geräte können beispielsweise Handmaschinen im Baubereich sein wie Bohrmaschinen, Bohrhämmer, Handkreissägen, Stichsägen, elektrische Schleifmaschinen oder ähnliches.

Selbstverständlich kann die vorliegende Erfindung auch Einsatz finden bei Geräten, die typischerweise unter stets ähnlichen Einsatzbedingungen betrieben werden.

Ein Ausführungsbeispiel der Erfindung ist in der Zeichnung dargestellt. Es zeigt dabei im einzelnen:
- Figur 1:: ein Schaltbild mit Funktionsblöcken für einen Schutzschalter,
- Figur 2:: ein Schaltbild im Detail,
- Figur 3:: ein weiteres Schaltbild mit Funktionsblöcken für einen Schutzschalter,
- Figur 4:: ein weiteres Schaltbild im Detail zur Darstellung der Funktionsblöcke nach Figur 3 und
- Figur 5:: ein weiteres Schaltbild im Detail zur Darstellung der Funktionsblöcke nach Figur 3.

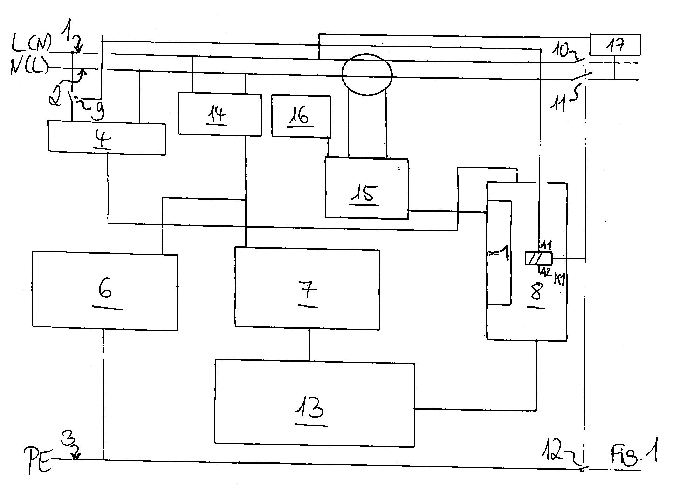

Figur 1 zeigt ein Schaltbild mit Funktionsblöcken für einen Schutzschalter nach der vorliegenden Erfindung. Es ist ein Phasenleiter 1 und ein Nullleiter 2 zu sehen. Weiterhin ist ein Schutzleiter 3 vorhanden.

Mit der Bezugsziffern 4 ist der Funktionsblock bezeichnet, der die Generierung einer Hilfsspannung für die Schaltstufe 8 darstellen. Der Brummspannungsdetektor 6 ist zur Überprüfung eines Fehlerzustandes mit dem Schutzleiter 3 verbunden. Der Bremsspannungsdetektor 6 ist optisch mit einer Auswerteschaltung 7 gekoppelt, mittels derer erkannt wird, ob der Schutzleiter 3 eine Überspannung hat oder eine Unterspannung. Diese Auswerteschaltung 7 ist wiederum optisch mit einem Eingang der Schaltstufe 8 verbunden. Der Auswerteschaltung 7 und dem Brummspannungsdetektor 6 wird noch über einen Spannungsteiler 14 aus dem Phasenleiter 1 und dem Neutralleiter 2 eine Spannung zur Verfügung gestellt.

Mit der Schaltstufe 8 werden steuerbare Schalter 9, 10, 11 und 12 angesteuert, die im Fehlerfall geöffnet werden.

Weiterhin wird über die Schaltstufe 8 noch ein Steuermittel 13 gesteuert, mittels dem eine Betriebsabschaltsperre der Auswerteschaltung 7 erfolgt, wenn ein Fehlerzustand erkannt wurde.

Zur Überprüfung eines Fehlerstroms zwischen dem Phasenleiter 1 und dem Neutralleiter 2 ist noch eine an sich bekannte DI-Auslösestufe 15 vorhanden. Über Einstellmittel 16 kann voreingestellt werden, ob die Empfindlichkeit für die Erkennung des Fehlerstroms bei 10 mA liegen soll oder bei 30 mA. Von dem DI-Auslöseelement kann noch (beispielsweise farbig) angezeigt werden, wie groß der gemessene Fehlerstrom war. Das Ausgangssignal der DI-Auslösestufe 15 wird einem weiteren Eingang der Schaltstufe 8 zugeführt. Diese löst dann aus, wenn mindestens eine der Schaltungen 7 oder 15 einen Fehlerfall erkannt hat.

Außerdem ist noch ein Taster 17 vorhanden, mittels dessen Betätigung in an sich bekannter Weise ein Fehlerstrom induziert werden kann, so dass das Auslösen des Schutzschalters überprüft werden kann.

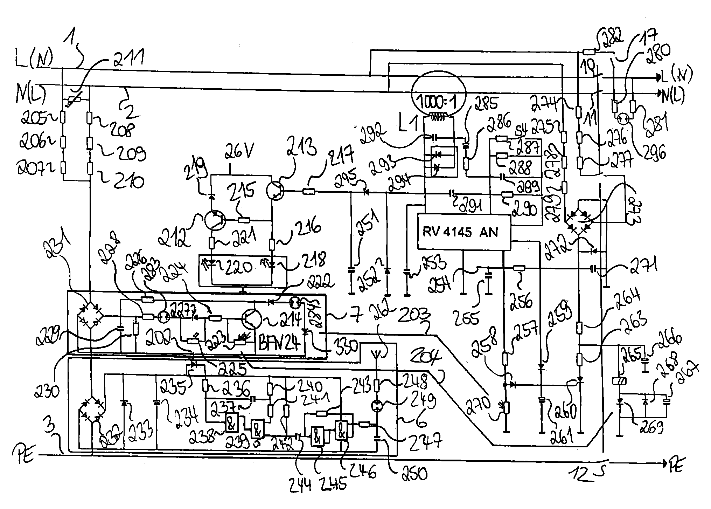

Figur 2 zeigt einen Schaltplan zu den in Figur 1 erläuterten Funktionsblöcken im Detail. Dieser Schaltplan enthält auch den Brummspannungsdetektor 6. An der mit der Bezugsziffer 202 gekennzeichneten Stelle der Figur 2 besteht eine optische Kopplung zwischen dem Brummspannungsdetektor 6 und den Bauteilen der Figur 2, die die Auswerteschaltung 7 bilden. Ein Ende der Hilfsspannungserzeugung ist mit dem PE entsprechend der Bezugsziffer 3 verbunden. Weiterhin zeigen die Linien mit den Bezugsziffern 203 und 204 die optische Kopplung zwischen der Auswerteschaltung 7 und den Bauteilen der Schaltstufe 8.

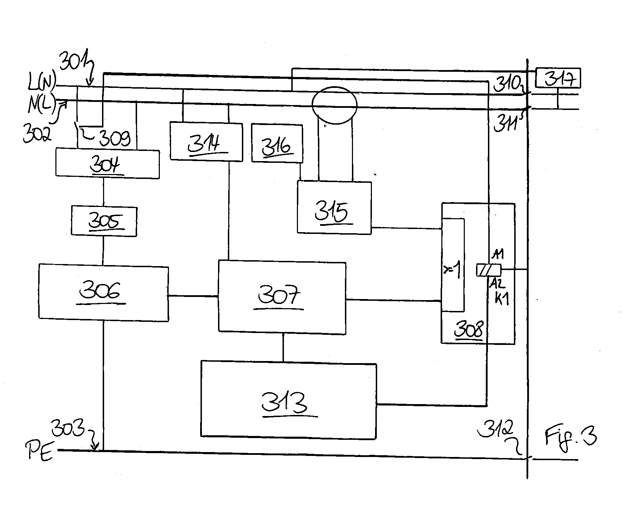

Figur 3 zeigt ein Schaltbild mit Funktionsblöcken für einen Schutzschalter nach der vorliegenden Erfindung. Es ist ein Phasenleiter 301 und ein Nullleiter 302 zu sehen. Weiterhin ist ein Schutzleiter 303 vorhanden.

Mit den Bezugsziffern 304 und 305 sind die Funktionsblöcke bezeichnet, die die Generierung einer Hilfsspannung für den Brummspannungsdetektor 306 darstellen. Der Brummspannungsdetektor 306 ist zur Überprüfung eines Fehlerzustandes mit dem Schutzleiter 303 verbunden. Der Brummspannungsdetektor 306 ist optisch mit einer Auswerteschaltung 307 gekoppelt, mittels derer erkannt wird, ob der Schutzleiter eine Überspannung hat oder eine Unterspannung. Diese Auswerteschaltung 307 ist wiederum optisch mit einem Eingang einer Schaltstufe 408 verbunden. Der Auswerteschaltung 307 wird noch über einen Spannungsteiler 314 aus dem Phasenleiter 301 und dem Neutralleiter 302 eine Spannung zur Verfügung gestellt.

Mit der Schaltstufe 308 werden steuerbare Schalter 309, 310, 311 und 312 angesteuert, die im Fehlerfall geöffnet werden.

Weiterhin wird über die Schaltstufe 308 noch ein Steuermittel 313 gesteuert, mittels dem eine Betriebsabschaltsperre der Auswerteschaltung 307 erfolgt, wenn ein Fehlerzustand erkannt wurde.

Zur Überprüfung eines Fehlerstroms zwischen dem Phasenleiter 301 und dem Neutralleiter 302 ist noch eine an sich bekannte DI-Auslösestufe 315 vorhanden. Über Einstellmittel 316 kann voreingestellt werden, ob die Empfindlichkeit für die Erkennung des Fehlerstroms bei 10 mA liegen soll oder bei 30 mA. Von dem DI-Auslöseelement kann noch (beispielsweise farbig) angezeigt werden, wie groß der gemessene Fehlerstrom war. Das Ausgangssignal der DI-Auslösestufe 315 wird einem weiteren Eingang der Schaltstufe 308 zugeführt. Diese löst dann aus, wenn mindestens eine der Schaltungen 307 oder 315 einen Fehlerfall erkannt hat.

Außerdem ist noch ein Taster 317 vorhanden, mittels dessen Betätigung in an sich bekannter Weise ein Fehlerstrom induziert werden kann, so dass das Auslösen des Schutzschalters überprüft werden kann.

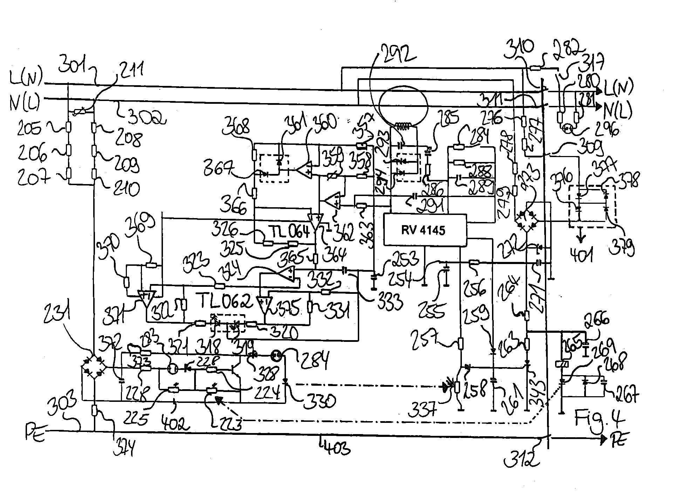

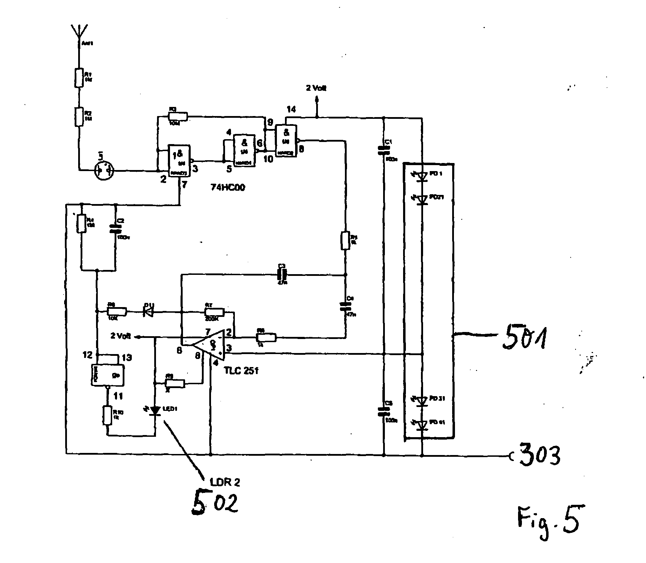

Figur 4 zeigt einen Schaltplan eines Teils der in Figur 3 erläuterten Funktionsblöcke im Detail. Diese Schaltung korrespondiert mit dem Brummspannungsdetektor, der in Figur 5 im Detail dargestellt ist. An der mit der Bezugsziffer 401 gekennzeichneten Stelle besteht eine optische Kopplung zur Stelle mit der Bezugsziffer 501 der Figur 5. An der mit der Bezugsziffer 402 gekennzeichneten Stelle der Figur 4 besteht eine optische Kopplung zu der mit der Bezugsziffer 502 gekennzeichneten Stelle der Figur 5. Die mit der Bezugsziffer 403 gekennzeichnete Stelle der Figur 4 ist über einen PIN mit der Stelle kontaktiert, die in der Figur 5 mit der Bezugsziffer 503 bezeichnet ist.

Figur 5 zeigt nochmals ein Detailschaltbild des Brummspannungsdetektors 6. Die Anbindungen an die Schaltung nach Figur 4 sind bereits im Zusammenhang mit Figur 4 erläutert.

## Patentansprüche

1. DI-Fehlerstromschutzschalter in der elektrischen Energieversorgung, mit Auswertungsmitteln (15, 315) zur Auswertung des Summenstroms der auf einem oder mehreren Phasenleitern (1, 301) sowie einem Nullleiter (2, 302) fließenden Ströme, mit ersten Erkennungsmitteln (15, 315) zur Erkennung von Fehlerzuständen abhängig von einem von den Auswertungsmitteln (15, 315) erkannten Summenstrom ungleich dem Wert "0" und mit weiteren Erkennungsmitteln (6, 306) zur Erkennung von Fehlerzuständen eines Schutzleiters,
**dadurch gekennzeichnet, dass** die weiteren Erkennungsmittel (6, 306) eine Antennenvorrichiung aufweisen, die über eine Auswerteschaltung mit dem Schutzleiter (3, 303) verbunden ist, wobei mit der Antennenvorrichtung Signale elektromagnetischer Frequenzen einer Brummspannung empfangen werden, wobei die Spannungssignale der empfangenen Spannung mit dem Spannungspegel auf dem Schutzleiter verglichen werden, wobei im Falle einer erkannten Phasenspannung auf dem Schutzleiter (3, 303) die Auslösemittel (8, 308) des DI-Fehlerstromschutzschalters ausgelöst werden.

2. DI-Fehlerstromschutzschalter nach Anspruch 1,
**dadurch gekennzeichnet, dass** die Signalübertragungen zwischen den Erkennungsmitteln (6, 7, 306, 307) und den Auslösemitteln (8, 308) optisch erfolgen.

3. Verwendung eines DI-Fehlerstromschutzschalters nach Anspruch 1 oder 2 in einem elektrischen Gerät.
